# EUROPEAN PATENT APPLICATION

(11) **EP 4 683 400 A1**
(43) Date of publication of application: **21.01.2026**
(21) Application number: 23927503.5
(22) Date of filing: 16.03.2023
(51) Int. Cl.: H04W 56/00, H04W 16/28

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2023/010287
(87) International publication number: WO 2024/189884

(57) **Abstract**

A terminal according to one aspect of the present disclosure includes: a control section that determines a timing advance (TA) to be applied to a certain uplink (UL) transmission, based on a configuration for a serving cell; and a transmitting section that performs the UL transmission based on the TA, wherein in the configuration for the serving cell, an index of a TA group (TAG) to which the serving cell belongs and a unified Transmission Configuration Indication (TCI state) to be applied to the UL transmission are associated with each other. According to one aspect of the present disclosure, it is possible to appropriately control a UL transmission.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Future radio communication systems (for example, the radio communication systems in versions later than Rel. 16/5G) are assumed to control communication based on mobility between a plurality of cells (inter-cell mobility) including a non-serving cell or the inter-cell mobility using a plurality of transmission/reception points (for example, multi-TRPs (MTRPs)). In the inter-cell mobility, it is also assumed that a candidate cell is configured separately from a serving cell, and that switching/switch between the serving cell and the candidate cell is performed.

However, when applying the inter-cell mobility (for example, switching between the serving cell and the candidate cell), the problem is how to control UL transmission (for example, control of a timing advance).

In addition to the multi-TRPs described above, the introduction of a unified TCI framework is also under study. The provisions that support the application of both are not clear enough. If the relationship between them is not clear, a UE may not be able to appropriately determine the TA in accordance with a cell/TRP, which may increase communication throughput and suppress the improvement of communication quality.

The present disclosure is made in view of these points, and one of its objectives is to provide a terminal, a radio communication method and a base station that can appropriately control the UL transmission.

### Solution to Problem

A terminal according to one aspect of the present disclosure includes: a control section that determines a timing advance (TA) to be applied to a certain uplink (UL) transmission, based on a configuration for a serving cell; and a transmitting section that performs the UL transmission based on the TA, wherein in the configuration for the serving cell, an index of a TA group (TAG) to which the serving cell belongs and a unified Transmission Configuration Indication (TCI state) to be applied to the UL transmission are associated with each other.

### Advantageous Effects of Invention

According to one aspect of the present disclosure, it is possible to appropriately control a UL transmission.

### Brief Description of Drawings

[FIG. 1] FIGS. 1A to 1D are diagrams illustrating an example of multi-TRPs.
[FIG. 2] FIG. 2 is a diagram illustrating an example of a timing advance group (TAG) to which cells included in a cell group belong.
[FIG. 3] FIGS. 3A and 3B are diagrams illustrating an example of an MAC CE for a timing advance command.
[FIG. 4] FIG. 4 is a diagram illustrating an example of a configuration of the TAG when the association of a TAG ID is supported for a candidate cell.
[FIG. 5] FIGS. 5A and 5B illustrate an example of a unified/common TCI framework.
[FIG. 6] FIGS. 6A and 6B illustrate an example of a DCI based TCI state indication.
[FIG. 7] FIGS. 7A to 7C are diagrams illustrating an example of PUSCH transmission using a plurality of panels.
[FIG. 8] FIGS. 8A and 8B are diagrams illustrating an example of PUCCH transmission using the plurality of panels.
[FIG. 9] FIG. 9 is a diagram illustrating an example of a schematic configuration of a radio communication system according to one embodiment.
[FIG. 10] FIG. 10 is a diagram illustrating an example of a configuration of a base station according to one embodiment.
[FIG. 11] FIG. 11 is a diagram illustrating an example of a configuration of a user terminal according to one embodiment.
[FIG. 12] FIG. 12 is a diagram illustrating an example of a hardware configuration of the base station and the user terminal according to one embodiment.
[FIG. 13] FIG. 13 is a diagram illustrating an example of a vehicle according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), and a demodulation reference signal (DMRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Multi-TRPs)

In NR, one or a plurality of transmission/reception points (TRPs) (multi-TRPs) are under study to perform DL transmission to the UE using one or a plurality of panels (multi-panels). The UE is also under study to perform UL transmission to one or a plurality of TRPs.

Note that the plurality of TRPs may correspond to the same cell identifier (cell ID) or to a different cell ID. Such a cell ID may be a physical cell ID (for example, a PCI) or may be a virtual cell ID.

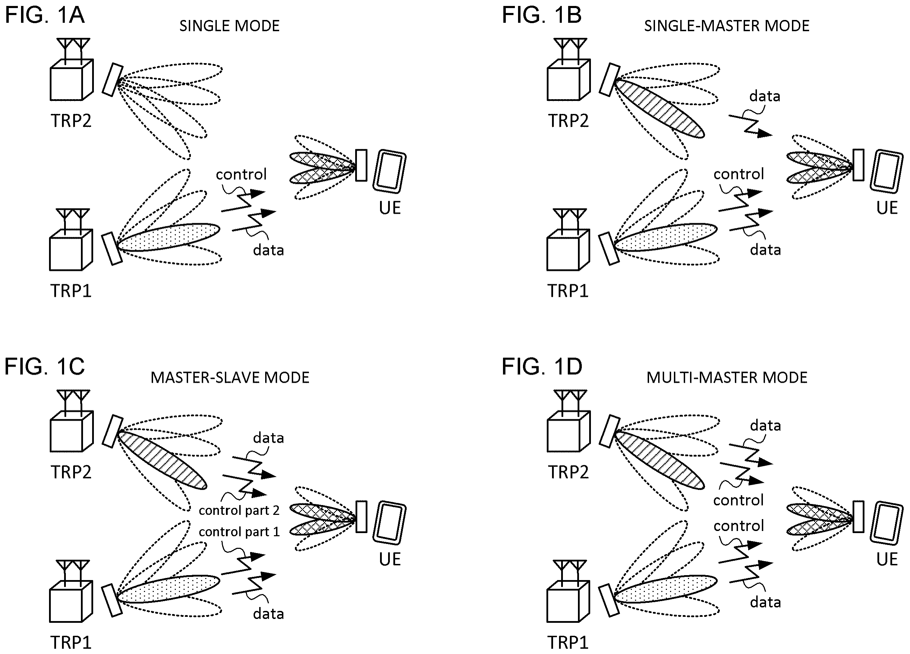

FIGS. 1A to 1D are diagrams illustrating an example of a multi-TRP scenario. These examples assume that each of the TRPs is capable of transmitting four different beams, but the configuration is not limited to such configurations.

FIG. 1A illustrates an example of a case in which only one TRP (TRP1 in this example) from among the multi-TRPs performs transmission to the UE, which may be referred to as a single mode, a single TRP, or the like. In this case, TRP1 transmits both a control signal (PDCCH) and a data signal (PDSCH) to the UE.

In the present disclosure, a single TRP mode may mean a mode when the multi-TRPs (mode) are not configured.

FIG. 1B illustrates an example of a case in which only one TRP (TRP1 in this example) from among the multi-TRPs transmits the control signal to the UE, and such multi-TRPs transmit the data signal, which may be referred to as a single-master mode. The UE receives each of the PDSCHs transmitted from such multi-TRPs based on one piece of downlink control information (DCI).

FIG. 1C illustrates an example of a case in which each of the multi-TRPs transmits a part of the control signal to the UE, and such multi-TRPs transmit the data signal, which may be referred to as a master-slave mode. Part 1 of the control signal (DCI) may be transmitted at TRP1, and part 2 of the control signal (DCI) may be transmitted at TRP2. Part 2 of the control signal may depend on part 1. The UE receives each of the PDSCHs transmitted from such multi-TRPs based on these parts of the DCI.

FIG. 1D illustrates an example of a case in which each of the multi-TRPs transmits a separate control signal to the UE, and such multi-TRPs transmit a data signal, which may be referred to as a multi-master mode. A first control signal (DCI) may be transmitted at TRP1, and a second control signal (DCI) may be transmitted at TRP2. The UE receives each of the PDSCHs transmitted from such multi-TRPs based on these pieces of the DCI.

In a case in which a plurality of PDSCHs, which may be referred to as multi-PDSCHs (multiple PDSCHs), from multi-TRPs as shown in FIG. 1B, are scheduled using one piece of DCI, such DCI may be referred to as single DCI (S-DCI, single PDCCH). In a case in which the plurality of PDSCHs from the multi-TRPs as shown in FIG. 1D are each scheduled using a plurality of pieces of DCI, the plurality of pieces of DCI may be referred to as multi-DCI (M-DCI, multi-PDCCHs (multiple PDCCHs)).

A different transport block (TB)/code word (CW)/different layer may be transmitted from each TRP of the multi-TRPs. Alternatively, the same TB/CW/layer may be transmitted from each TRP of the multi-TRPs.

Non-coherent joint transmission (NCJT) is under study as a form of multi-TRP transmission. In the NCJT, for example, TRP1 modulation-maps a first codeword, layer-maps it and transmits a first PDSCH using a first precoding for a first number of layers (for example, two layers). TRP2 modulation-maps a second codeword, layer-maps it and transmits a second PDSCH using a second precoding for a second number of layers (for example, two layers).

Note that the plurality of PDSCHs (multi-PDSCHs) to be transmitted using the NCJT may be defined as partially or completely overlapping with respect to at least one of time and a frequency domain. In other words, with respect to the first PDSCH from a first TRP and the second PDSCH from a second TRP, at least one of the time and a frequency resource may overlap.

The first PDSCH and the second PDSCH may be assumed to be not in a quasi-co-location (QCL) relationship (not quasi-co-located). The reception of the multi-PDSCHs may be read interchangeably as the simultaneous reception of the PDSCH that is not of a certain QCL type (for example, the QCL type D).

In a URLLC for the multi-TRPs, PDSCH (transport block (TB) or codeword (CW)) repetition spanning over the multi-TRPs is under study to be supported. Repetition method (URLLC scheme, for example, schemes 1, 2a, 2b, 3 and 4) spanning over the multi-TRPs on the frequency domain, a layer (spatial) domain or a time domain are under study to be supported. In scheme 1, the multi-PDSCHs from the multi-TRPs are multiplexed using space division multiplexing (SDM). In schemes 2a and 2b, the PDSCH from the multi-TRPs is multiplexed using frequency division multiplexing (FDM). In scheme 2a, a redundancy version (RV) is the same for the multi-TRPs. In scheme 2b, the RV may be the same or different for the multi-TRPs. In schemes 3 and 4, the multi-PDSCHs from the multi-TRPs are multiplexed using time division multiplexing (TDM). In scheme 3, the multi-PDSCHs from the multi-TRPs are transmitted in one slot. In scheme 4, the multi-PDSCHs from the multi-TRPs are transmitted in a different slot.

Such a multi-TRP scenario enables more flexible transmission control using a channel with better quality.

The NCJT using the multi-TRPs/panels may use a high rank. To support ideal and non-ideal backhaul between the plurality of TRPs, both the single DCI (single PDCCH, for example, FIG. 1B) and the multi-DCI (multi-PDCCHs, for example, FIG. 1D) may be supported. For both the single DCI and the multi-DCI, the maximum number of TRPs may be 2.

An extension of the TCI is under study for a single PDCCH design (mainly for the ideal backhaul). Each of the TCI code points in the DCI may correspond to one or two TCI states. A TCI field size may be the same as that in Rel. 15.

For the PDCCH/CORESET as specified in Rel. 15, one TCI state without a CORESET pool index (CORESETPoolIndex), which may be referred to as TRP information (TRP Info), is configured for one

### CORESET.

For the enhancement of the PDCCH/CORESET specified in Rel. 16, the CORESET pool index is configured for each of the CORESETs in the multi-TRPs based on the multi-DCI.

### (Timing Advance Group)

In a case in which the plurality of TRPs are used, a case in which distances between the UE and each of the TRPs differ from one another may occur. The plurality of TRPs may be included in the same cell (for example, a serving cell). Alternatively, a certain TRP from among the plurality of TRPs may correspond to the serving cell, while the other TRPs may correspond to a non-serving cell. In this case, it is assumed that the distances between each of the TRPs and the UE may be different.

In an existing system, a transmission timing of a UL (uplink) channel and/or a UL signal (UL channel/signal) is adjusted by a timing advance (TA). Reception timings of the UL channel/signal from different user terminals (UEs) are adjusted on the side of a radio base station (TRP: transmission and reception point, also referred to as a gNB: gNodeB, or the like).

The UE may control a timing of the UL transmission by applying the timing advance (multiple timing advances) for each of timing advance groups (TAGs) that are configured in advance.

In a case in which the multiple timing advances are applied, the timing advance group (TAG) that is classified by the transmission timing is supported. The UE may control a UL transmission timing in each of the TAGs, assuming that the same TA offset (or TA value) is applied to each of the TAGs. In other words, the TA offset may be configured independently for each of the TAGs.

In the case in which the multiple timing advances are applied, the UE can adjust an uplink signal reception timing from the UE at the radio base station by independently adjusting the transmission timing of the cell belonging to each of the TAGs even when a plurality of cells are used.

The TAG (for example, the serving cell belonging to the same TAG) may be configured by a higher layer parameter. For the serving cells belonging to the same TAG (for example, the serving cells for which the UL is configured), the same timing advance value may be applied. The timing advance group that includes a SpCell of an MAC entity may be referred to as a primary timing advance group (PTAG), while other TAGs may be referred to as a secondary timing advance group (STAG). The maximum number of the TAGs may be X for each of cell groups (for example, an MCG/SCG) (for example, X = 4).

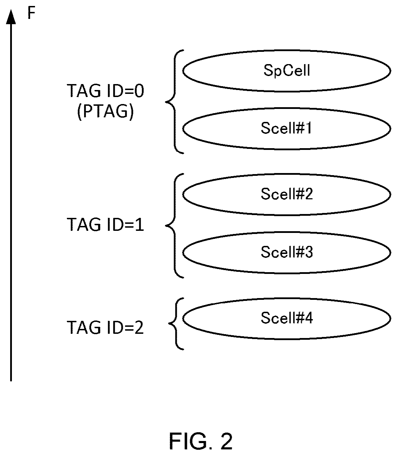

In the existing system (for example, Rel-16 NR), a configuration of a maximum of four TAGs is supported for each of the cell groups (for example, the MCG/SCG) (see FIG. 2). FIG. 2 illustrates the case in which three TAGs are configured for the cell group including SpCell and SCells #1 to #4. This shows the case in which SpCell and SCell #1 belong to a first TAG (PTAG or TAG #0), SCell #2 and SCell #3 belong to a second TAG (TAG #1), and SCell #4 belongs to a third TAG (TAG #2).

A timing advance command (TA command) may be notified to the UE using an MAC control element (for example, an MAC CE). The TA command is a command that indicates a transmission timing value for the uplink channel and is included in the MAC control element. The TA command (TAC) is signaled in an MAC layer from the radio base station to the UE. The UE controls a certain timer (for example, a TA timer) based on the reception of the TA command.

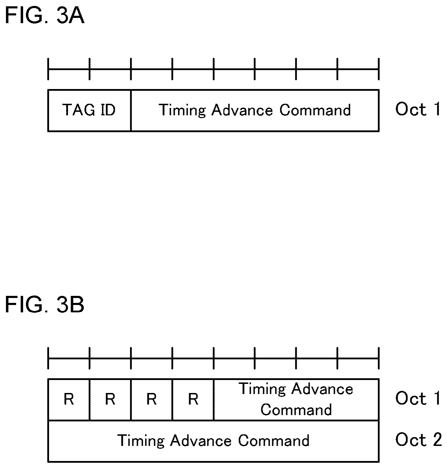

The MAC CE for the timing advance command may be configured to include a field for a timing advance group index (for example, a TAG ID) and a field for the timing advance command (see FIG. 3A). Such an MAC CE may be configured with 1 octet (= 8 bits).

The field of the TAG ID (TAG ID field) may be configured with, for example, 2 bits. The TAG ID field may be used to indicate the TAG ID of the TAG that is addressed. The field of the timing advance command (TAC field) may be configured with, for example, 6 bits. The TAC field may indicate an index value T_{A} (0, 1, 2...63) that is used to control the amount/value (relative amount/relative value) of timing adjustment that the MAC entity must apply. The MAC CE for the timing advance command shown in FIG. 3A may be referred to as a TAC MAC CE.

FIG. 3B is a diagram illustrating another example of the MAC CE for the timing advance command. The MAC CE shown in FIG. 3B may be referred to as an absolute TAC MAC CE. The MAC CE may be configured with 2 octets (= 16 bits). Specifically, such an MAC CE may include a field for reserve bits (R bit field) and the field for the timing advance command (TAC field). The R bit field (R = 0) may be configured with, for example, 4 bits. The TAC field may be configured with, for example, 12 bits, spanning over 2 octets. The TAC field in FIG. 3B may indicate the index value used to control an actual TA amount/value (absolute amount/absolute value) that the MAC entity must apply as in FIG. 3A. The absolute TAC MAC CE may not include the TAG ID field shown in FIG. 3A.

The MAC CE shown in FIG. 3A may be used after an initial access is established. In contrast, the MAC CE shown in FIG. 3B is used only during the initial access and may be included in an RAR, or the like. Each of the fields included in the MAC CE for the timing advance command described above may be referred to as a field related to the TA. Among them, the TAC field shown in FIG. 3A may be referred to as a TA adjustment field/field for indicating TA adjustment/field related to the TA adjustment, and the TAC field shown in FIG. 3B may be referred to as an absolute TAC field/field for indicating an absolute TAC.

Parameters corresponding to each of the TAG IDs may be configured by the higher layer parameter. For example, parameters such as a time alignment timer (for example, a timeAlignmentTimer), or the like corresponding to each of the TAG IDs may be configured. Alternatively, the TAG ID may be configured for each of the serving cells by the higher layer parameter (for example, a tag-ID included in a ServingCellConfig). Note that the TAG ID/parameter may be updated by the MAC CE after being configured by the higher layer parameter.

The time alignment timer may be maintained for a UL time alignment. In Rel. 17, the time alignment timer may be configured/associated with each of the TAGs. The UE, when receiving the MAC CE for the timing advance command (for example, the TAC MAC CE), starts or restarts the time alignment timer that is each related to the timing advance group (for example, the TAG) indicated.

The MAC entity, when it receives the TAC MAC CE, and a certain value (N_{TA}) is maintained with the TAG indicated, applies the timing advance command for the TAG indicated, or starts or restarts the time alignment timer related to the TAG indicated. The certain value (N_{TA}) may be the timing advance between a DL and the UL.

The operation when the time alignment timer expires may be defined separately for the PTAG and the STAG. Note that the timing advance group (TAG) that includes the SpCell of the MAC entity may be referred to as the primary timing advance group (PTAG), while other TAGs may be referred to as the secondary timing advance group (STAG).

For example, in Rel. 17, a certain operation for the PTAG is supported to be applied when the timing advance timer corresponding to the PTAG expires, while a certain operation for the STAG is supported to be applied when the timing advance timer corresponding to the STAG expires.

For example, when the time alignment timer expires, the following actions (for example, the certain operation for the PTAG/the certain operation for the STAG) may be performed.

### [Certain Operation for PTAG]

When the time alignment timer is associated with the PTAG,
- Flush all HARQ buffers of all of the serving cells.
- If configured, notify an RRC to release the PUCCH for all of the serving cells.
- If configured, notify the RRC to release the SRS.
- Clear all DL allocations that are configured and all UL allocations that are configured.
- Clear a PUSCH resource for semi-persistent CSI reporting.
- Expire all of the time alignment timers that are running.
- Maintain N_{TA} of all of the TAGs.

### [Certain Operation for STAG]

When the time alignment timer is associated with the STAG, for all of the serving cells belonging to such a TAG,
- Flush all of the HARQ buffers.
- If configured, notify the RRC to release the PUCCH.
- If configured, notify the RRC to release the SRS.
- Clear all of the DL allocations that are configured and all of the UL allocations.
- Clear the PUSCH resource for the semi-persistent CSI reporting.
- Maintain N_{TA} of such a TAG.

### (Control of UL Transmission Based on Timing Advance)

Future radio communication systems, in inter-cell mobility, are assumed to control the UL transmission based on the timing advance for the serving cell (or the TRP of the serving cell) and the non-serving cell/an additional cell (or the TRP of the non-serving cell/additional cell). Alternatively, future radio communication systems are assumed to include a case in which a different TAG (or a TAG-ID) is configured for one or more TRPs (for example, the plurality of TRPs that have different PCIs) corresponding to a certain cell (or CC). Alternatively, a case in which a different TRP corresponding to a certain cell shares a common TAG is also assumed.

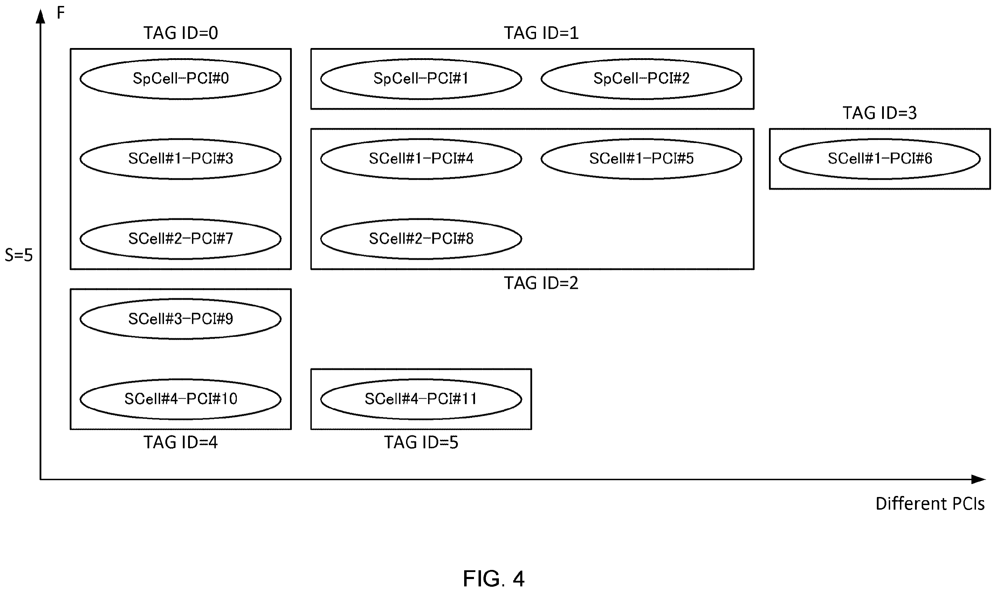

FIG. 4 is a diagram illustrating an example of a configuration of the TAG for the plurality of cells (or TRPs) with the different PCIs.

A maximum of M PCIs (for example, serving cell + candidate cell associated with the serving cell) can be configured for each CC, and a case in which a configuration of a maximum of N (for example, N ≤ M) TAGs is supported for a maximum of M PCIs is also assumed. In this case, one or a plurality of PCIs may be associated with one TAG.

Up to S serving cells in the cell group (or for a maximum of S serving cells), one or the plurality of PCIs may be associated with one TAG. In this case, a maximum of T TAGs may be configured in consideration of one PCI for each CC (case 1). In other words, a maximum of T x N TAGs may be configured for a maximum of M x S cells. Alternatively, a maximum of U TAGs may be configured for a maximum of M x S cells (case 2).

In this way, when the candidate cell is configured/applied/supported, it is assumed that a different serving cell/a different candidate cell is associated with the same TAG. The TAG of the candidate cell may be indicated by the base station or determined based on the TA of the candidate cell acquired by the UE.

It is also conceivable that the UE considers the TA corresponding to such a candidate cell for the UL transmission of the candidate cell (for example, the candidate cell with an indication to switch to the serving cell) to perform the UL transmission. When considering the TA of the candidate cell, the UE needs to acquire the TA of the candidate cell (for example, TA acquisition of candidate cells).

As the TA acquisition of the candidate cell, a plurality of TA acquisition methods such as the TA acquisition using a RACH (for example, RACH-based solutions), the TA acquisition without using the RACH (RACH-less solutions), or the like are conceivable. The TA acquisition method may be read interchangeably as a TA acquisition scheme, a TA acquisition type or a TA acquisition procedure. In the present disclosure, acquisition of the TA, measurement of the TA, calculation of the TA, computation of the TA and determination of the TA may be read interchangeably with one another.

For example, the UE may acquire the TA of the candidate cell by transmitting the RACH (for example, a PDCCH ordered RACH) that is indicated/triggered by the PDCCH to the candidate cell. Information on the TA of the candidate cell (for example, the TA value) may be included in a response signal of the RACH (for example, the RAR). The RAR may be transmitted from the serving cell or may be transmitted from the candidate cell. Alternatively, the TA of the candidate cell may be acquired using the RACH triggered by the UE or the RACH triggered with the higher layer from a network. A PDCCH order may be triggered only by a source cell (or the serving cell).

Alternatively, the UE may acquire the TA of the candidate cell by transmitting a signal other than the RACH to the candidate cell. The information on the TA of the candidate cell (for example, the TA value) may be indicated to the UE by the base station. As the signal other than the RACH, for example, the SRS may be applied (for example, SRS based TA measurement).

Alternatively, the UE may measure/calculate/acquire the TA for the candidate cell based on a DL signal (for example, a downlink reference signal) transmitted from each cell (for example, the candidate cell/the serving cell). A method in which the UE acquires the TA for the candidate cell based on the DL signal transmitted from one or more cells may be referred to, for example, as UE based TA measurement.

In the UE based TA measurement, the downlink reference signal may be a certain DL signal (for example, the synchronization signal block (for example, the SSB)/CSI-RS). For example, the UE may measure the offset/difference in the reception timings of the DL signals from the plurality of cells (or two cells) to acquire the TA of the candidate cell.

The plurality of cells may include a reference cell (for example, the serving cell). In this case, the UE may calculate the TA required for the candidate cell based on the reception timing of the reference cell (and the TA value of the reference cell) and the timing difference between such a reference cell and the candidate cell (for example, T). The UE may acquire the TA of the candidate cell by using the timing advance command (TAC) transmitted from the serving cell.

### (Unified/Common TCI Framework)

According to a unified TCI framework, a plurality of types (UL/DL) of channels/RSs can be controlled by a common framework. The unified TCI framework may, instead of specifying the TCI state or the spatial relation for each channel as in Rel. 15, indicate a common beam (common TCI state) and apply it to all of the UL and DL channels, or apply the common beam for the UL to all of the UL channels and apply the common beam for the DL to all of the DL channels.

One common beam for both the DL and the UL or a common beam for the DL and a common beam for the UL (two common beams in total) are under study.

The UE may assume the same TCI state for the UL and the DL (joint TCI state, joint TCI pool, joint common TCI pool or joint TCI state set). The UE may assume a different TCI state for each of the UL and the DL (separate TCI state, separate TCI pool, UL separate TCI pool and DL separate TCI pool, separate common TCI pool, UL common TCI pool and DL common TCI pool).

A default beam for the UL and the DL may be aligned by a beam management based on the MAC CE (MAC CE level beam indication). A default TCI state of the PDSCH may be updated to adjust to a default UL beam (spatial relation).

The beam management based on the DCI (DCI level beam indication) may indicate the common beam/a unified TCI state from the same TCI pool for both the UL and the DL (joint common TCI pool, joint TCI pool or set). X (> 1) TCI states may be activated by the MAC CE. A UL/DL DCI may select one of X active TCI states. The TCI state that is selected may be applied to the channel/RS of both the UL and the DL.

A TCI pool (set) may be a plurality of TCI states configured by an RRC parameter or the plurality of TCI states activated by the MAC CE (active TCI state, active TCI pool or set) from among the plurality of TCI states configured by the RRC parameter. Each TCI state may be the QCL type A/D RS. The SSB, the CSI-RS or the SRS may be configured as the QCL type A/D RS.

The number of TCI states corresponding to each of one or more TRPs may be specified. For example, the number N (≥ 1) of the TCI states (UL TCI states) applied to the channel/RS of the UL and the number M (≥ 1) of the TCI states (DL TCI states) applied to the channel/RS of the DL may be specified. At least one of N and M may be notified/configured/indicated to the UE via the higher layer signaling/physical layer signaling.

In the present disclosure, when described as N = M = X (X is an arbitrary integer), it may mean that X (corresponding to X TRPs) TCI states common to the UL and the DL (joint TCI states) are notified/configured/indicated to the UE. When described as N = X (X is an arbitrary integer) and M = Y (Y is an arbitrary integer, Y = X may be allowed), it may mean that each of X (corresponding to X TRPs) UL TCI states and Y (corresponding to Y TRPs) DL TCI states (i.e., separate TCI states) are notified/ configured/indicated to the UE.

For example, when described as N = M = 1, it may mean that the TCI state common to one UL and the DL for a single TRP is notified/configured/indicated to the UE (joint TCI state for the single TRP).

For example, when described as N = 1 and M = 1, it may mean that one UL TCI state and one DL TCI state for a single TRP are separately notified/configured/indicated to the UE (separate TCI state for the single TRP).

For example, when described as N = M = 2, it may mean that the TCI state common to a plurality of (two) ULs and the DL for the plurality of (two) TRPs is notified/configured/indicated to the UE (joint TCI state for the plurality of TRPs).

For example, when described as N = 2 and M = 2, it may mean that a plurality of (two) UL TCI states and a plurality of (two) DL TCI states for the plurality of (two) TRPs are notified/configured/indicated to the UE (separate TCI state for the plurality of TRPs).

Note that although the case in which the values of N and M are 1 or 2 is described in the example above, the values of N and M may be 3 or more, and N and M may be different.

In Rel. 17, N = M = 1 is under study to be supported. For example, indicating one common beam (for example, the common beam) by the RRC/MAC CE/DCI may be supported, and such one common beam may be applied to a plurality of DL/UL channels/reference signals. Other cases may be supported in Rel. 18 and later versions.

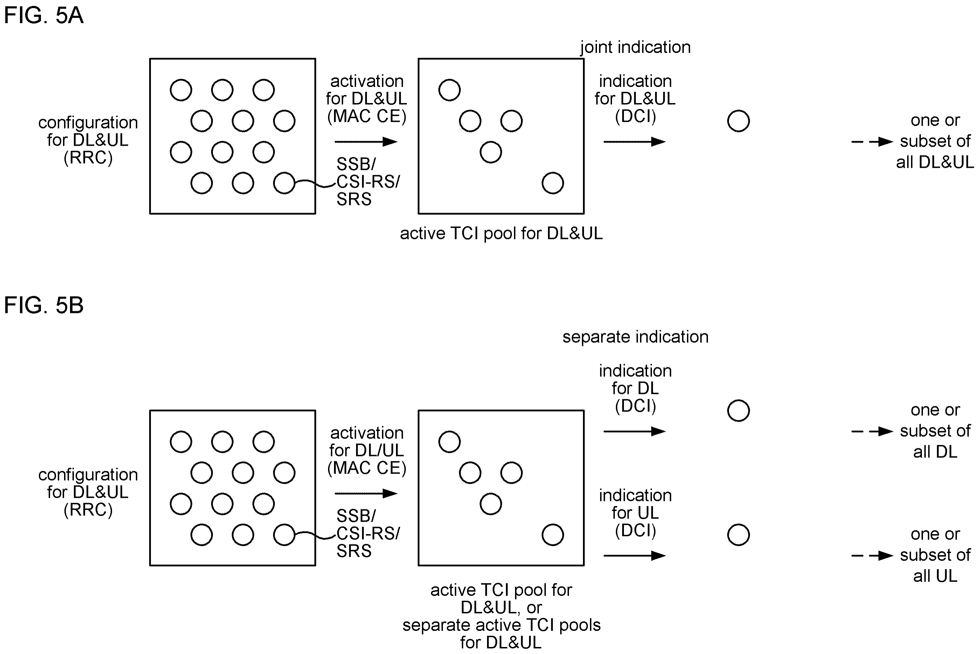

FIGS. 5A and 5B illustrate an example of the unified TCI framework. FIG. 5A illustrates an example of a joint DL/UL TCI state (for example, a joint DL/UL TCI state), and FIG. 5B illustrates an example of the separate TCI state (for example, a separate TCI (DL TCI state and UL TCI state).

In the example shown in FIG. 5A, the RRC parameter (information element) configures the plurality of TCI states for both the DL and the UL. In the present disclosure, the TCI state configured by the RRC parameter may be referred to as the TCI state that is configured or a configured TCI state (for example, configured TCI states). The MAC CE may activate the plurality of TCI states from among the plurality of TCI states that are configured. The DCI may indicate one of the plurality of TCI states that are activated. In the present disclosure, the TCI state indicated by the DCI may be referred to as the TCI state that is indicated or an indicated TCI state (for example, an indicated TCI state).

The DCI may be the UL DCI (for example, the DCI used to schedule the PUSCH) or the DL DCI (for example, the DCI used to schedule the PDSCH). The TCI state that is indicated may be applied to at least one (or all) of the UL/DL channels/RSs. One DCI may indicate both a UL TCI and a DL TCI.

In the example shown in this figure, one point may be one TCI state applied to both the UL and the DL or two TCI states each applied to the UL and the DL.

At least one of the plurality of TCI states configured by the RRC parameter and the plurality of TCI states activated by the MAC CE may be referred to as the TCI pool (common TCI pool, joint TCI pool or TCI state pool). The plurality of TCI states activated by the MAC CE may be referred to as the active TCI pool (active common TCI pool).

Note that in the present disclosure, the higher layer parameter (RRC parameter) that configures the plurality of TCI states may be referred to as configuration information that configures the plurality of TCI states or simply as "configuration information." In the present disclosure, being indicated one of the plurality of TCI states using the DCI may be receiving the indication information indicating one of the plurality of TCI states that are included in the DCI or simply receiving the "indication information."

In the example in FIG. 5B, the RRC parameter configures the plurality of TCI states for both the DL and the UL (joint common TCI pool). The MAC CE may activate the plurality of TCI states (active TCI pool) from among the plurality of TCI states that are configured. The (separate) active TCI pool for each of the UL and the DL may be configured/activated.

The DL DCI or a new DCI format may select (indicate) one or more (for example, one) TCI states. The selected TCI state may be applied to one or more (or all) of the channels/RSs of the DL. The DL channel may be the PDCCH/PDSCH/CSI-RS. The UE may determine the TCI state of each channel/RS of the DL using the operation of the TCI state in Rel. 16 (TCI framework). The UL DCI or the new DCI format may select (indicate) one or more (for example, one) TCI states. The selected TCI state may be applied to one or more (or all) of the channels/RSs of the UL. The UL channel may be the PUSCH/SRS/PUCCH. In this way, different pieces of DCI may separately indicate the UL TCI and the DL DCI.

In Rel-17 NR and later versions, the MAC CE/DCI is assumed to support activation/indication of the beam to the TCI state associated with different physical cell identifiers (PCIs). In Rel-18 NR and later versions, the MAC CE/DCI is assumed to support indication of a change of the serving cell to the cell with the different PCI.

The method of configuring/indicating the TCI state shown in FIG. 5A (for example, the joint DL/UL TCI state) and the method of configuring/indicating the application of the TCI state shown in FIG. 5B (for example, the separate TCI state) may be alternately applied. Which of the joint DL/UL TCI state or the separate TCI state is applied may be configured by the higher layer parameter from the base station to the UE.

### [Physical Layer Procedure for Data/Antenna Port QCL]

To provide the reference signal for the DMRS of the PDSCH and the DMRS of the PDCCH as well as the CSI-RS in a certain CC, and furthermore, to provide a reference for determination of a UL TCI filter if a UL TX (transmission) spatial filter for dynamic grant based and configuration grant based PUSCH and PUCCH resources as well as the SRS in a certain CC is available, the UE can be configured with a list of a maximum of 128 DLorJointTCIState (DL or joint TCI state) configurations in a PDSCH-Config (PDSCH configuration).

If a BWP in the CC does not include a configuration for the DLorJointTCIState or a UL-TCIState (UL TCI state), the UE can apply the configuration for the DLorJointTCIState or the UL-TCIState from a reference BWP of a reference CC. If the UE is configured with the DLorJointTCIState or the UL-TCIState in any CC in the same band, a TCI-State, a SpatialRelationInfo (spatial relation information) and a PUCCH-SpatialRelationInfo (PUCCH spatial relation information) except for SpatialRelationInfoPos (spatial relation information for position) in the band are not assumed to be configured. The UE assumes that the UE is not configured with the DLorJointTCIState or the UL-TCIState in any CC in the CC when the UE is configured with the TCI-State in any CC in a CC list by simultaneousTCI-UpdateList1-r16 (simultaneous TCI update list 1), simultaneousTCI-UpdateList2-r16 (simultaneous TCI update list 2), simultaneousSpatial-UpdatedList1-r16 (simultaneous spatial update list 1) or simultaneousSpatial-UpdatedList2-r16 (simultaneous spatial update list 2).

The UE receives, if available, a maximum of eight activation commands used to map the TCI states and/or pairs of TCI states with one TCI state for the channel/signal of the DL and one TCI state for the channel/signal of the UL to a code point of a DCI field 'Transmission Configuration Indication' (TCI) for one of CC/DL BWPs or a set of the CC/DL BWPs. For the set of CC/DL BWPs, and furthermore, if available, for one of the CC/DL BWPs, when a set of TCI state IDs is activated, for the BWP for all of the DL and/or the UL in the CC indicated, the same set of the TCI state IDs is applied. Here, an applicable list of the CC is determined by the CC indicated in its activation command. If the activation command maps the DLorJointTCIState and/or the UL-TCIState to only one TCI code point, the UE applies the DLorJointTCIState and/or the UL-TCIState indicated to one of the CC/DL BWPs or the set of CC/DL BWPs, and if the indicated mapping for one single TCI code point is applied, the UE applies the DLorJointTCIState and/or the UL-TCIState indicated to one of the CC/DL BWPs or the set of the CC/DL BWPs.

If a bwp-id or the cell for a QCL type A/D source RS in QCL-Info of the TCI state that is configured with the DLorJointTCIState is not configured, the UE assumes that the QCL type A/D source RS is configured in the CC/DL BWP to which the TCI state is applied.

### (Indication of TCI State)

A Rel-17 unified TCI framework supports the following modes 1 to 3.
[Mode 1] MAC CE based TCI state indication
[Mode 2] DCI based TCI state indication with DL assignment (DCI based TCI state indication by DCI format 1_1/1_2 with DL assignment)
[Mode 3] DCI based TCI state indication without DL assignment (DCI based TCI state indication by DCI format 1_1/1_2 without DL assignment)

The UE with the TCI state configured and activated with a Rel-17 TCI state ID (for example, tci-StateId_r17) receives DCI format 1_1/1_2 that provides the indicated TCI state with the Rel-17 TCI state ID for one CC, or receives DCI format 1_1/1_2 that provides the indicated TCI state with the Rel-17 TCI state ID for all of the CCs in the same CC list as the CC list configured by simultaneous TCI update list 1 or simultaneous TCI update list 2 (for example, simultaneousTCI-UpdateList1 or simultaneousTCI-UpdateList2). DCI format 1_1/1_2 may be with the DL assignment if it is available or may be without it.

If DCI format 1_1/1_2 is not with the DL assignment, the UE can assume (validate) the following for the DCI.
- A CS-RNTI is used to scramble a CRC for the DCI.
- Values of the following DCI fields (special fields) are set as follows:
   - The redundancy version (RV) field is all '1's.
   - A modulation and coding scheme (MCS) field is all '1's.
   - A new data indicator (NDI) field is 0.
   - A frequency domain resource assignment (FDRA) field is all '0's for FDRA type 0, or all '1's for FDRA type 1, or all '0's for a dynamic switch (DynamicSwitch) (similar to validation of the PDCCH of a release of a DL semi-persistent scheduling (SPS) or a UL grant type 2 scheduling).

Note that the DCI in mode 2/mode 3 described above may be referred to as beam indication DCI.

In Rel. 15/16, if the UE does not support an active BWP change via the DCI, the UE ignores a BWP indicator field. For the relationship between the support of a Rel-17 TCI state and the interpretation of a TCI field, a similar operation is also under study. It is under study that if the UE is configured with the Rel-17 TCI state, the TCI field is always present in DCI format 1_1/1_2, and if the UE does not support a TCI update via the DCI, the UE ignores the TCI field.

In Rel. 15/16, whether the TCI field is present or not (presence information of the TCI in the DCI, tci-PresentInDCI) is configured for each CORESET.

The TCI field in DCI format 1_1 is 0 bits if the higher layer parameter, the tci-PresentInDCI, is not enabled, otherwise 3 bits. If the BWP indicator field indicates the BWP other than the active BWP, the UE follows the operation below.
[Operation] If the higher layer parameter, the tci-PresentInDCI, is not enabled for the CORESET used for the PDCCH that transmits DCI format 1_1, the UE assumes that the tci-PresentInDCI is not enabled for all of the CORESETs in the BWP indicated; otherwise, the UE assumes that the tci-PresentInDCI is enabled for all of the CORESETs in the BWP indicated.

The TCI field in DCI format 1_2 is 0 bits if the higher layer parameter, tci-PresentInDCI-1-2, is not configured, otherwise 1, 2 or 3 bits as determined by the higher layer parameter, tci-PresentInDCI-1-2. If the BWP indicator field indicates the BWP other than the active BWP, the UE follows the operation below. [Operation] If the higher layer parameter, tci-PresentInDCI-1-2, is not configured for the CORESET used for the PDCCH that transmits DCI format 1_2, the UE assumes that the tci-PresentInDCI is not enabled for all of the CORESETs in the BWP indicated; otherwise, the UE assumes that tci-PresentInDCI-1-2 is configured for all of the CORESETs in the BWP indicated with the same value as tci-PresentInDCI-1-2 configured for the CORESET used for the PDCCH that transmits DCI format 1_2.

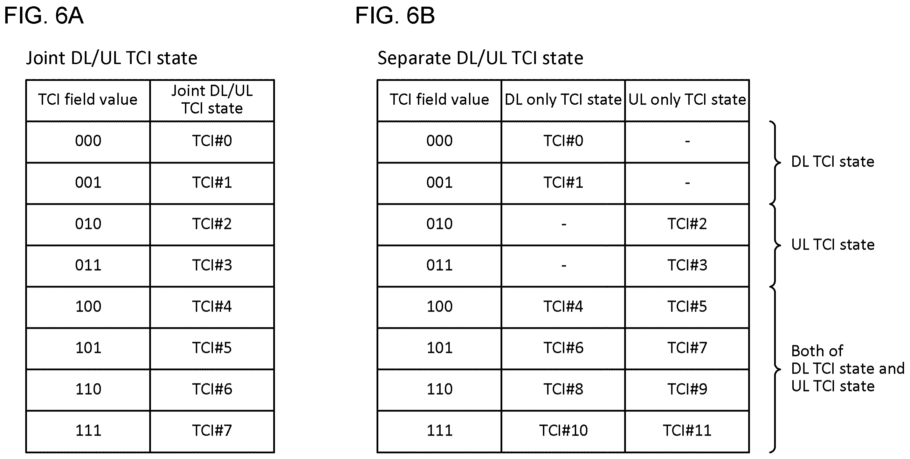

FIG. 6A illustrates an example of a DCI based joint DL/UL TCI state indication. The TCI state ID indicating the joint DL/UL TCI state is associated with the value of the TCI field for the joint DL/UL TCI state indication.

FIG. 6B illustrates an example of a DCI based separate DL/UL TCI state indication. The TCI state ID of at least one of the TCI state ID indicating the TCI state only for the DL and the TCI state ID indicating the TCI state only for the UL is associated with the value of the TCI field for the separate DL/UL TCI state indication. In this example, values 000 to 001 of the TCI field are associated only with one TCI state ID for the DL, values 010 to 011 of the TCI field are associated only with one TCI state ID for the UL, and values 100 to 111 of the TCI field are associated with both one TCI state ID for the DL and one TCI state ID for the UL.

### (Indicated TCI State/Configured TCI State)

With respect to the Rel-17 TCI state, the unified/common TCI state may mean the Rel-17 TCI state indicated using the (Rel-17) DCI/MAC CE/RRC (indicated Rel-17 TCI state (indicated Rel. 17 TCI state)).

In the present disclosure, indicated Rel-17 TCI state, indicated TCI state, unified/common TCI state, TCI state applied to a plurality of types of signals (channels/RSs) and TCI state for the plurality of types of signals (channels/RSs) may be read interchangeably with one another.

The indicated Rel-17 TCI state may be shared with at least one of a UE-dedicated reception in the PDSCH/a PDCC (updated using the Rel-17 DCI/MAC CE/RRC), the PUSCH of the dynamic grant (DCI)/a configured grant and a plurality (for example, all) of the dedicated PUCCH resources. The TCI state indicated by the DCI/MAC CE/RRC may be referred to as the indicated TCI state or the unified TCI state.

With respect to the Rel-17 TCI state, the TCI state other than the unified TCI state may mean the Rel-17 TCI state configured using the (Rel-17) MAC CE/RRC (configured Rel-17 TCI state (configured Rel. 17 TCI state)). In the present disclosure, configured Rel-17 TCI state, configured TCI state, TCI state other than the unified TCI state and TCI state applied to a specific type of signal (channel/RS) may be read interchangeably with one another.

The configured Rel-17 TCI state may not be shared with at least one of a UE-dedicated reception in the PDSCH/PDCCH (updated using the Rel-17 DCI/MAC CE/RRC), the PUSCH of the dynamic grant (DCI)/configured grant and the plurality (for example, all) of the dedicated PUCCH resources. The configured Rel-17 TCI state is configured by the RRC/MAC CE for each CORESET/for each resource/for each resource set and may be configured such that the configured Rel-17 TCI state is not updated even when the indicated Rel-17 TCI state (common TCI state) described above is updated.

For the UE-dedicated channel/signal (RS), the application of the indicated Rel-17 TCI state is under study. The notification of the UE using the higher layer signaling (RRC signaling) as to whether the indicated Rel-17 TCI state or the configured Rel-17 TCI state is applied to a non-UE-dedicated channel/signal is also under study.

The RRC parameter related to the configured Rel-17 TCI state (TCI state ID) is under study to have the same configuration as the RRC parameter for the TCI state in Rel. 15/16. The configured Rel-17 TCI state is under study to be configured/indicated for each CORESET/for each resource/for each resource set using the RRC/MAC CE. The UE is also under study to determine such a configuration/indication based on a specific parameter.

The update of the indicated TCI state and the update of the configured TCI state are under study to be separately performed for the UE. For example, when the unified TCI state for the indicated TCI state is updated for the UE, the configured TCI state may not be updated. The UE is also under study to determine such an update based on the specific parameter.

Whether the indicated Rel-17 TCI state is applied or the indicated Rel-17 TCI state is not applied (the configured Rel-17 TCI state is applied, and the TCI state separately configured from the indicated Rel-17 TCI state is applied) for the PDCCH/PDSCH is also under study to be switched using the higher layer signaling (RRC/MAC CE).

With respect to a beam indication in the cell (intra-cell) (indication of the TCI state), the indicated Rel-17 TCI state is under study to be supported for the PDSCH related to the UE-dedicated CORESET and such a CORESET, and for the PDSCH related to the non-UE-dedicated CORESET and such a CORESET.

With respect to the beam indication between cells (inter-cell) (for example, L1/L2 inter-cell mobility), the indicated Rel-17 TCI state is also under study to be supported for the UE-dedicated CORESET and the PDSCH related to such a CORESET.

In Rel. 15, whether the TCI state is indicated for CORESET #0 or not depended on the implementation of the base station. In Rel. 15, such an indicated TCI state is applied to CORESET #0 for which the TCI state is indicated. For CORESET #0 for which the TCI state is not indicated, the SSB and the QCL selected when the latest (most recent) PRACH is transmitted are applied.

In a unified TCI state framework in Rel. 17 or later versions, the TCI state related to CORESET #0 is under study.

For example, in the unified TCI state framework in Rel. 17 or later versions, for the Rel-17 TCI state indication of CORESET #0, whether the indicated Rel-17 TCI state associated with the serving cell is applied or not is configured by the RRC for each CORESET, and if it is not applied, an existing MAC CE/RACH signaling mechanism (legacy MAC CE/RACH signaling mechanism) may be used.

Note that the CSI-RS related to the Rel-17 TCI state applied to CORESET #0 may be located using the QCL with the SSB related to a serving cell PCI (physical cell ID) (same as in Rel. 15).

For CORESET #0, the CORESET with a common search space (CSS), the CORESET with the CSS and a UE-dedicated search space (UE-specific search space (USS)), whether to follow the indicated Rel-17 TCI state or not may be configured by the RRC parameter for each CORESET. For the CORESET, if it is not configured to follow the indicated Rel-17 TCI state, the configured Rel-17 TCI state may be applied to the CORESET.

For the non-UE-dedicated channel/RS (excluding CORESET), whether to follow the indicated Rel-17 TCI state or not may be configured by the RRC parameter for each channel/resource/resource set. For the channel/resource/resource set, if it is not configured to follow the indicated Rel-17 TCI state, the configured Rel-17 TCI state may be applied to the channel/resource/resource set.

### (Channel/RS to Which Indicated TCI State is Applied)

The indicated TCI state by the MAC CE/DCI may be applied to the following channels/RSs.

### [PDCCH]

- For CORESET0, if a followUnifiedTCIState (to follow the unified TCI state) is configured, the indicated TCI state is applied. Otherwise, for the CORESET, the Rel-15 specifications are applied. In other words, CORESET0 follows the TCI state activated by the MAC CE or located using the QCL with the SSB.
- For the CORESETs with USS/CSS type 3 other than index 0, the indicated TCI state is always applied.
- For the CORESET with the CSS at least other than CSS type 3 other than index 0, if it is configured to follow the unified TCI state, the indicated TCI state is applied. Otherwise, the configured TCI state for the CORESET is applied to the CORESET.

### [PDSCH]

- For all of the UE-dedicated PDSCHs, the indicated TCI state is always applied.
- For a non-UE-dedicated PDSCH (the PDSCH scheduled by the DCI in the CSS), if the followUnifiedTCIState is configured (for the CORESET of the PDCCH that schedules the PDSCH), the indicated TCI state may be applied. Otherwise, the configured TCI state for the PDSCH is applied to the PDSCH. For the PDSCH, if the followUnifiedTCIState is not configured, whether the non-UE-dedicated PDSCH follows the indicated TCI state or not may be determined depending on whether the followUnifiedTCIState is configured for the CORESET used for scheduling the PDSCH or not.

### [CSI-RS]

- For an A-CSI-RS for a CSI acquisition or the beam management, if the followUnifiedTCIState is configured (for the CORESET of the PDCCH triggering the A-CSI-RS), the indicated TCI state is applied. For other CSI-RSs, the configured TCI state for the CSI-RS is applied.

### [PUCCH]

- For all of the dedicated PUCCH resources, the indicated TCI state is always applied.

### [PUSCH]

- For a dynamic/configured grant PUSCH, the indicated TCI state is always applied.

### [SRS]

- For an SRS resource set for an A-SRS for the application of the beam management and an A/SP/P-SRS for the application of a codebook (CB)/non-codebook (NCB)/antenna switching, if it is configured to follow the unified TCI state, the indicated TCI state is applied. For other SRSs, the configured TCI state in the SRS resource set is applied.

### (Multi-Panel Transmission)

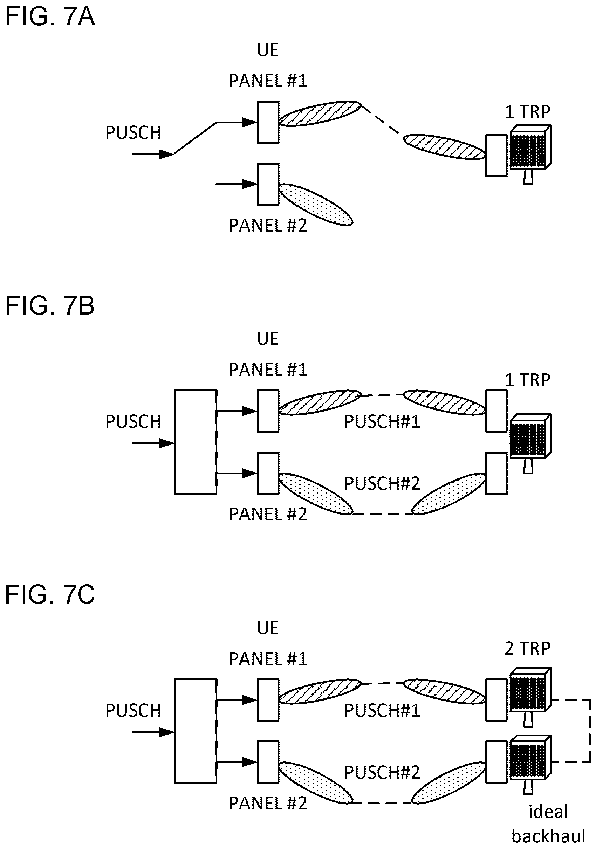

In the Rel-15 and Rel-16 UEs, only one beam and panel are used for the UL transmission at a single point in time (FIG. 7A). In Rel. 17 and later versions, to improve the throughput and reliability of the UL, for one or more transmission/reception points (TRPs), a simultaneous UL transmission of multi-beams (a plurality of beams) and the multi-panels (the plurality of panels) (for example, a simultaneous multi-panel UL transmission (STxMP)) is under study.

For the simultaneous UL transmission using the multi-beams and the multi-panels, the reception by one TRP with the multi-panels (FIG. 7B) or the reception by two TRPs with the ideal backhaul (FIG. 7C) is under study. The single PDCCH for scheduling a plurality of PUSCHs (for example, simultaneous transmission of PUSCH #1 and PUSCH #2) is under study. The support of a panel-dedicated transmission and the introduction of a panel ID are under study.

The base station may use the UL transmission configuration indication (TCI) or the panel ID to configure or indicate the panel-dedicated transmission for the UL transmission. The UL TCI (UL TCI state) may be based on the signaling similar to a DL beam indication supported in Rel. 15. The panel ID may be implicitly or explicitly applied to the transmission of at least one of a target RS resource or a target RS resource set, the PUCCH, the SRS and the PRACH. If the panel ID is explicitly notified, the panel ID may be configured in at least one of a target RS, the target channel and the reference RS (for example, a DL RS resource configuration or the spatial relation information).

In the simultaneous UL transmission using the multi-panels, the UE may transmit a plurality of physical uplink control channels (PUCCHs). As a transmission method for the simultaneous UL transmission using the multi-panels for the PUCCH, the following schemes 1 and 2 are under study.

### [Scheme 1]

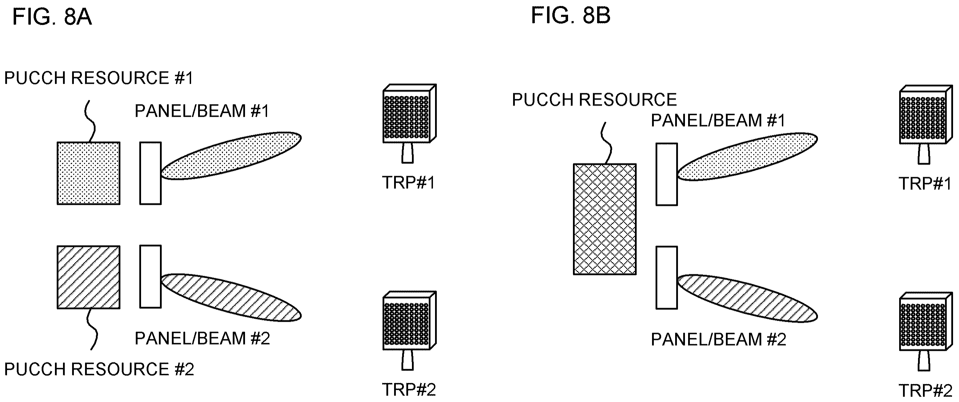

Two PUCCH resources overlap in the time domain and are simultaneously transmitted. Each of the two PUCCH resources is associated with one different panel/beam (see FIG. 8A). Each of the two beams is transmitted toward a respective TRP.

### [Scheme 2]

One PUCCH resource is simultaneously transmitted using two panels/space relations. One PUCCH resource is associated with two panels/beams (see FIG. 8B). Each of the two beams is transmitted toward the respective TRP.

Note that although the case in which the number of multi-panels is two is described as an example, the number of panels may be three or more in the present disclosure. In other words, the number of panels, two, may be read interchangeably as a number equal to or more than three.

Note that scheme 2 may be applied to the repetition transmission of the PUCCH of a single frequency network (SFN).

In the simultaneous UL transmission using the multi-panels, the UE may transmit the plurality of physical uplink shared channels (PUSCHs). As a transmission method for the simultaneous UL transmission using the multi-panels for the PUSCH, the following schemes 3 to 5 are under study.

### [Scheme 3]

- Single DCI (S-DCI) based space division multiplexing (SDM) method:
   In this method, the different layers/DMRS ports of one PUSCH are separately precoded and simultaneously transmitted from different UE beams/panels. Note that in such a method, whether to support two codewords (CWs) or not, and whether to simultaneously transmit from two different UE beams/panels or not are issues to be studied.

### [Scheme 4]

- S-DCI based SFN method:
   In this method, the same layer/DMRS port of one PUSCH is simultaneously transmitted from two UE beams/panels that are all different.

### [Scheme 5]

- PUSCH simultaneous transmission method of M-DCI:
   In this method, two independent PUSCHs related to different TRPs are simultaneously transmitted in the same active BWP. For example, the total number of layers of two PUSCHs may be a maximum of four layers. Note that the number of layers of each of these two PUSCHs may be specified in the specifications and may be, for example, one to three layers or a maximum of two layers.

In this case, the UE can simultaneously transmit two independent PUSCHs related to different TRPs in the same active BWP. The total number of layers corresponding to these two PUSCHs may be specified as a maximum of X (or X or less). For example, X may be 4 or another value. The maximum number of layers for each of the two PUSCHs may be X/2 (for example, 2) or another value.

More specifically, for a multi-DCI based STxMP, in the schedule of the PUSCH for the simultaneous transmission of the PUSCH (for example, STxMP PUSCH + PUSCH transmission), the SRS resource set and the CORESET pool index may be associated with each other based on a certain rule. For example, a first SRS resource set may be associated with a first CORESET pool index (for example, 0), and another SRS resource set may be associated with a second CORESET pool index (for example, 1).

The PUSCH may be associated with the SRS resource set with the same value as a CORESER pool index. For example, the PUSCH may be associated with the SRS resource set that is associated with the CORESER pool index of the CORESET corresponding to the PDCCH that schedules such a PUSCH.

The method of interpreting an SRI/TPMI field in the DCI may be different for the dynamic grant based PUSCH (for example, a DG-PUSCH)) and the configuration grant based PUSCH (for example, a type 2 CG-PUSCH).

In the case of the DG-PUSCH, the SRI/TPMI field indicated may correspond to the SRS resource set associated with the same value as the CORESET pool index of the CORESET that receives the DCI scheduling the PUSCH (for example, scheduling DCI format0_1/0_2). In the case of the type 2 CG-PUSCH, the SRI/TPMI field indicated may correspond to the SRS resource set associated with the same value as the CORESER pool index of the CORESET that receives activation DCI.

In the case of a type 1 CG-PUSCH, one SRS resource set index is configured in the RRC parameter related to the configuration grant (for example, a ConfiguredGrantConfig), and a certain RRC parameter (for example, an srs-ResourceIndicator/a precodingAndNumberOfLayers) may correspond to such an SRS resource set.

For the multi-DCI based STxMP (for example, PUSCH + PUSCH), considering asymmetric panels, for two panels/TRPs, the number of SRS resources/an SRS port (or the number of SRS ports)/maximum rank (for example, a maxrank)/a codebook subset/a full-power mode is also assumed to be separately configured. The asymmetric panels may mean that two panels have different capabilities with respect to the number of SRS ports/maximum rank/codebook subset, or the like.

For example, if two SRS resource sets are configured for the multi-DCI based STxMP (for example, PUSCH + PUSCH), certain parameters corresponding to the two SRS resource sets to be configured may be separately configured. The certain parameters may be, for example, at least one of the number of SRS resources, the maximum rank/the maximum number of SSB indices (for example, the maxRank/a Lmax), the codebook subset (for example, the codebook subset), and the full-power mode (for example, a fullpower mode).

### (UL TCI State)

As described above, as a beam indication method for the UL, the use of the UL TCI state is under study. The notification of the UL TCI state is similar to the notification of a DL beam (DL TCI state) of the UE. Note that the DL TCI state may be read interchangeably with the TCI state for the PDCCH/PDSCH.

The channel/signal for which the UL TCI state is configured (indicated), which may be referred to as the target channel/RS, may be, for example, at least one of the PUSCH (DMRS of the PUSCH), the PUCCH (DMRS of the PUCCH), a random-access channel (Physical Random Access Channel (PRACH)), the SRS, and the like.

The RS (source RS) in a QCL relation with such a channel/signal may be, for example, a DL RS (for example, the SSB, the CSI-RS or the TRS) or a UL RS (for example, the SRS or the SRS for the beam management).

In the UL TCI state, the RS in the QCL relation with such a channel/signal may be associated with the panel ID for receiving or transmitting such an RS. Such an association may be explicitly configured (or indicated) by the higher layer signaling (for example, the RRC signaling or the MAC CE) or may be implicitly determined.

The correspondence relationship between the RS and the panel ID may be configured as part of UL TCI state information or as part of at least one of resource configuration information, the spatial relation information, and the like of such an RS.

The QCL type indicated by the UL TCI state may be the existing QCL types A to D, may be another QCL type or may include a certain spatial relation, a relevant antenna port (port index), or the like.

The UE, when a relevant panel ID is indicated for the UL transmission (for example, indicated by the DCI), may use the panel corresponding to such a panel ID to perform such UL transmission. The panel ID may be associated with the UL TCI state, and the UE, when the UL TCI state is indicated (or activated) for a certain UL channel/signal, may identify the panel to be used for such UL channel/signal transmission according to the panel ID related to such a UL TCI state.

The UL/DL TCI state and the separate TCI state may be read interchangeably with each other.

### (Analysis)

Meanwhile, in Rel. 18 and later versions, in a multi-DCI based multi-TRP operation, two timing advances (TAs) are under study to be supported. In a single DCI based multi-TRP operation, the extension of power control to the unified TCI framework is also under study. As described above, several scenarios are assumed in which the simultaneous UL transmission from the plurality of panels is supported.

As described above, in existing specifications, the timing advance group (TAG) can be configured for each cell. The parameter corresponding to the TAG ID indicating the TAG can be configured/indicated by the higher layer parameter (for example, the ServingCellConfig). This TAG ID may be expressed as an integer from 0 to maxNrofTAGs - 1. For example, in Rel. 17, the maxNrofTAGs is 4.

In Rel. 18 and later versions, a case in which the multi-TRPs are configured and the unified TCI state is applied is under study to be introduced. In Rel. 17 and earlier versions, the application of the unified TCI state to the multi-TRPs is not supported. Furthermore, the TAG ID is under study to be associated with the unified TCI state (separate (UL/DL)/joint TCI state).

For example, in the multi-DCI based multi-TRP operation, for the TAG associated with the UL channel/signal to be targeted, the UE is under study to support the following.
- Associate the TAG ID with the unified TCI state (separate (UL/DL)/joint TCI state).
- In the UL transmission, the TAG ID associated with the unified TCI state (separate (UL/DL)/Joint TCI state) is used.
- Basically, the UE expects that the unified TCI state (of the UL channel/signal) (separate (UL/DL)/joint TCI state) associated with one CORESET pool index corresponds to one TAG.
- The UE may report that the unified TCI state (of the UL channel/signal) (separate (UL/DL)/joint TCI state) associated with one CORESET pool index supports corresponding to two (both) TAGs.

The handling of the association described above in the case where the spatial relation in the existing specifications is applied is also under study. Examples include the PUCCH, the dynamic grant based PUSCH (for example, the DG-PUSCH)), the configuration grant based PUSCH (for example, the type 2 CG-PUSCH) and the UL transmission such as various types of SRSs.

In this way, in the association between the TAG ID and the TCI state, when extended to the unified TCI state described above, the relationship between the TAG ID configured by the servingCellConfig and the TAG ID associated/configured with the unified TCI state of the serving cell is not clear. If the relationship between them is not clear, the UE may not be able to appropriately determine the TA in accordance with the cell/TRP, which may increase communication throughput and suppress the improvement of communication quality.

Therefore, the inventors of the present invention studied the association between the TAG ID and the unified TCI state and came up with the idea of an example of the present embodiment.

The following is a detailed description of embodiments according to the present disclosure with reference to the drawings. Note that each of the following aspects (for example, each case) may be used alone, or at least two of them may be applied in combination.

### (Various Alternative Names and the Like)

In the present disclosure, "A/B" and "at least one of A and B" may be read interchangeably with each other. In the present disclosure, "A/B/C" may mean "at least one of A, B and C."

In the present disclosure, activate, deactivate, indicate (or specify), select, configure, update, determine, and the like may be read interchangeably with one another. In the present disclosure, support, control, can control, operate, can operate, and the like may be read interchangeably with one another.

In the present disclosure, radio resource control (RRC), RRC parameter, RRC message, higher layer parameter, information element (IE), configuration, and the like may be read interchangeably with one another. In the present disclosure, medium access control control element (MAC Control Element (CE)), update command, activation/deactivation command, and the like may be read interchangeably with one another.

In the present disclosure, the higher layer signaling may be, for example, any of radio resource control (RRC) signaling, medium access control (MAC) signaling, broadcast information, other messages (for example, messages from a core network such as a protocol for positioning (for example, an NR Positioning Protocol A (NRPPa)/LTE Positioning Protocol (LPP)), or a combination thereof.

In the present disclosure, the MAC signaling may use, for example, the MAC control element (MAC CE), an MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, the downlink control information (DCI), uplink control information (UCI), or the like.

In the present disclosure, panel, UE panel, panel group, beam, beam group, precoder, Uplink (UL) transmission entity, transmission/reception point (TRP), base station, spatial relation information (SRI), spatial relation, SRS resource indicator (SRI), control resource set (COntrol REsource SET (CORESET)), Physical Downlink Shared Channel (PDSCH), codeword (CW), transport block (TB), reference signal (RS), antenna, antenna element, layer, transmission, port, antenna port (for example, the reference signal for demodulation (DeModulation Reference Signal (DMRS)) port), antenna port group (for example, a DMRS port group), group (for example, a spatial relation group, code division multiplexing (CDM) group, reference signal group, CORESET group, Physical Uplink Control Channel (PUCCH) group and PUCCH resource group), resource (for example, a reference signal resource and SRS resource), resource set (for example, a reference signal resource set), CORESET pool, downlink Transmission Configuration Indication state (TCI state) (DL TCI state), uplink TCI state (UL TCI state), unified TCI state, common TCI state, quasi-co-location (QCL), QCL assumption, and the like may be read interchangeably with one another.

A spatial relation information identifier (ID) (TCI state ID) and the spatial relation information (TCI state) may be read interchangeably with each other. "Spatial relation information" may be read interchangeably as "a set of spatial relation information," "one or a plurality of pieces of spatial relation information," or the like. The TCI state and the TCI may be read interchangeably with each other.

In the present disclosure, index, ID, indicator, resource ID, and the like may be read interchangeably with one another. In the present disclosure, sequence, list, set, group, family, cluster, subset, and the like may be read interchangeably with one another.

In the present disclosure, TRP index, CORESET pool index (CORESETPoolIndex), pool index, group index, and the like may be read interchangeably with one another.

In the present disclosure, the single PDCCH (DCI) may be referred to as the PDCCH (DCI) of a first scheduling type (for example, a scheduling type A (or type 1)). The multi-PDCCHs (DCI) may be referred to as the PDCCH (DCI) of a second scheduling type (for example, a scheduling type B (or type 2)).

In the present disclosure, for the single DCI, an i-th TRP (TRP #i) may mean an i-th TCI state, an i-th CDM group, or the like (i is an integer). For the multi-DCI, the i-th TRP (TRP #i) may mean the CORESET corresponding to the CORESET pool index = i, the i-th TCI state, the i-th CDM group, or the like (i is an integer).

In the present disclosure, multi-TRPs (MTRP, M-TRP), multi-TRP system, multi-TRP transmission and multi-PDSCH may be read interchangeably with one another.

In the present disclosure, single DCI (sDCI), single PDCCH, multi-TRP system based on single DCI, sDCI based MTRP, scheduling of the plurality of PUSCHs (corresponding to different SRIs) by one piece of DCI, sDCI based MTRP transmission and activation of two TCI states on at least one TCI code point may be read interchangeably with one another.

In the present disclosure, multi-DCI (mDCI), multi-PDCCHs, multi-TRP system based on the multi-DCI, mDCI based MTRP, mDCI based MTRP transmission, use of multi-DCI for MTRP, scheduling of the plurality of PUSCHs (corresponding to different pieces of SRI) by two pieces of DCI and configuring of two CORESET pool indices or CORESET pool index = 1 (or a value equal to or more than 1) may be read interchangeably with one another.

Repetition in the present disclosure may be read interchangeably as MTRP based repetition, Rel-17 repetition, repetition with different spatial relations applied, repetitive PUSCH, repetitive PUCCH, repetitive transmission, or the like with one another. Repetitive transmission in the following embodiments may correspond to at least one of repetitive transmission type A, repetitive transmission type B or other repetitive transmission types.

Note that for the repetitive PUSCH, the same codeword/transport block may be transmitted in each PUSCH (each repetition). Repetitive PUSCH may be read interchangeably as the plurality of PUSCHs with the same content (for example, the data/codeword/transport block) with each other.

In the present disclosure, first TRP and second TRP may be read interchangeably as first PUSCH and second PUSCH, first PUSCH transmission opportunity and second PUSCH transmission opportunity, first SRI and second SRI, or the like with one another.

MTRP PUSCH repetition in the present disclosure may be read interchangeably as two PUCCH repetitions to two TRPs, two PUSCH repetitions using two pieces of SRIs, two PUSCH repetitions using two sets of power control parameters (the power control parameters are described below), or the like with one another.

In the present disclosure, repetition of STRP PUSCH may mean repetitive transmission of the plurality of PUSCHs transmitted using one (the same) SRI/power control parameter set/beam/precoder. Note that single transmission may mean PUSCH transmission transmitted using one SRI/power control parameter set/beam/precoder.

Note that PUSCH repetition/PUSCH transmission to TRP1 (first TRP) may mean PUSCH repetition/PUSCH transmission using first SRI (or SRI field)/first set of power control parameters.

PUSCH repetition/PUSCH transmission to TRP2 (second TRP) may mean PUSCH repetition/PUSCH transmission using second SRI (or SRI field)/second set of power control parameters.

Note that in the present disclosure, the power control parameter may be at least one of P_{CMAX}, _{f}, _{c}, Maximum Power Reduction (MPR), P-MPR, additional maximum power reduction (Additional MPR (A-MPR)), ΔTc, P₀, alpha, pathloss reference signal (PL-RS) and closed loop index (1). Power control parameter set may mean a set including one or more power control parameters.

Repetitive transmission of PUSCH using the plurality of TRPs in the following embodiments is read interchangeably as M-TRP PUSCH, MTRP PUSCH repetition, PUSCH transmission using the plurality of TRPs, repetitive transmission of PUSCH for the plurality of TRPs, PUSCH spanning over the plurality of TRPs, repetitive PUSCH spanning over the plurality of TRPs, simply repetitive PUSCH, repetitive transmission, the plurality of PUSCH transmissions, PUSCH transmission using the plurality of pieces of SRI, M-TRP PUSCH, or the like with one another.

PUSCH transmission using the single TRP may be referred to as S-TRP PUSCH, STRP PUSCH repetition, PUSCH transmission using the single TRP, repetitive transmission of the PUSCH for the single TRP, PUSCH spanning over the single TRP, repetitive PUSCH spanning over the single TRP, single PUSCH transmission for the single TRP, simply single PUSCH transmission, PUSCH transmission in the single TRP, PUSCH transmission using single SRI, or the like.

In the following embodiments, TRP ID may be read interchangeably as CORESET pool index (CORESETPoolIndex) or may be read interchangeably as new ID related to the TA. The new ID related to the TA may indicate that a different TA may be applied to the UL transmission depending on the value.

In the following embodiments, "plurality" and "two" may be read interchangeably with each other. "TAG" and "TAG ID" may be read interchangeably with each other. "Cell," "CC" and "carrier" may be read interchangeably with one another. In the following embodiments, "calculation," "computation" and "acquisition" may be read interchangeably with one another.

The following description may be applied in the inter-cell mobility (for example, the L1/L2 inter cell mobility) or may be applied in communication control other than the inter-cell mobility. The L1/L2 inter-cell mobility may be read interchangeably as at least one of cell switching, cell switch and cell change.

### (Radio Communication Method)

### <First Embodiment>

The first embodiment relates to the association between the TAG ID and the unified TCI state (separate (UL/DL)/joint TCI state).

In the present disclosure, unified TCI state, separate TCI state, UL TCI state, DL TCI state and joint TCI state may be read interchangeably with one another.

The present disclosure describes a case in which the multi-TRPs are configured for a certain serving cell and the timing advance (TA) for each TRP is applied.

Whether the multi-TRPs are configured for a certain serving cell or not, and whether the timing advance (TA) for each TRP is applied or not may be determined based on the configuration of the higher layer parameter. In other words, the UE may determine the application of the multi-TRPs/application of the TA for each TRP based on the configuration of the higher layer parameter (for example, the higher layer parameter, the ServingCellConfig).

### <Option 1>

If the TAG ID is associated/configured with the unified TCI state, the TAG ID may not be present (absent) in the ServingCellConfig. Alternatively, in this case, the UE may assume that the TAG ID is not included in the ServingCellConfig. In option 1, the UE may follow the TAG ID with which the unified TCI state is associated/configured (may determine the TA based on such a TAG ID).

### <Option 2>

If the TAG ID is associated/configured with the unified TCI state, the UE may ignore the TAG ID provided by the ServingCellConfig. In other words, the UE may assume that the TAG ID is not included in the ServingCellConfig even if the TAG ID is included in the ServingCellConfig. In option 2, as in option 1, the UE may follow the TAG ID with which the unified TCI state is associated/configured (may determine the TA based on such a TAG ID). To summarize option 1 and option 2, the UE may assume that the TAG ID is not included in the ServingCellConfig, regardless of the presence or absence of the TAG ID.

### <Option 3>

The TAG ID that is associated/configured with the unified TCI state may be expressed as an integer from 0 to maxNrofTAGs - 1.

In the ServingCellConfig, two TAG IDs may be configured (may be included). In option 3, the UE may expect that the TAG ID with which the unified TCI state is associated/configured is one of the (for example, two) TAG IDs that are configured in the servingCellConfig.

### <Option 4>

The TAG ID that is associated/configured with the unified TCI state may be expressed as an integer from 0 to maxNrofTAGs - 1. In the ServingCellConfig, one TAG ID may be configured (may be included). In option 4, the UE may expect that the TAG ID with which the unified TCI state is associated/configured is the same as the TAG ID that is configured in the servingCellConfig.

### <Option 5>

As described in option 3, in the ServingCellConfig, two TAG IDs may be configured (may be included). In this case, a 1-bit indicator may be associated/configured with the unified TCI state to select one of the two TAG IDs configured by the servingCellConfig. For example, if such an indicator is "0," it may indicate the TAG ID with a small index, and if such an indicator is "1," it may indicate the TAG ID with a large index. The relationship between the value of the indicator and the TAG ID may be reversed. In other words, if such an indicator is "0," it may indicate the TAG ID with a large index, and if such an indicator is "1," it may indicate the TAG ID with a small index.

In Rel. 18 and later versions, the value of the maxNrofTAGs may be the same as or larger than that in Rel. 17 (for example, 4). For example, if the value of the maxNrofTAGs is larger than that in Rel. 17, more TAG IDs can be indicated, allowing for more flexible control of the TA.

According to the first embodiment described above, the UE can appropriately determine the timing advance.

### <Second Embodiment>

The first embodiment described above describes the association between the TAG ID and the unified TCI state (separate (UL/DL)/joint TCI state). Meanwhile, whether the association between the TAG ID and the unified TCI state should be uniformly applied to all of the TCI states or not is an issue. In other words, it is assumed that there may be a case in which such an association is not necessary.

Therefore, the second embodiment describes the conditions (restrictions) for applying the association between the TAG ID and the unified TCI state.

### <Option 1>

The UE may expect that all of the (every) unified TCI states are associated/configured with the TAG ID (for example, the TAG ID of each option described in the first embodiment). In other words, there may be no restrictions placed on the association between the TAG ID and the unified TCI state.

### <Option 2>

Several unified TCI states may not be associated/configured with the TAG ID (for example, the TAG ID of each option described in the first embodiment). Alternatively, the UE may expect that several unified TCI states are not associated/configured with the TAG ID. Such a TAG ID may be used (applied) (only) if the unified TCI state is associated/configured with a certain TAG ID. In contrast, if the unified TCI state is not associated/configured with a certain TAG ID, the UE may apply at least one of the following options.

### <Option 2-1>

The UE may use (apply) the TAG ID configured in the higher layer parameter, the servingCellConfig. In this case, the (number of) TAG IDs configured in the servingCellConfig may be one. Alternatively, the UE may assume that the number of TAG IDs configured in the servingCellConfig is one.

### <Option 2-2>

By default, the UE may use (apply) the TAG ID with a small/large index from among a plurality of (for example, two) TAG IDs configured in the servingCellConfig. In this case, the (number of) TAG IDs configured in the servingCellConfig may be two. Alternatively, the UE may assume that the number of TAG IDs configured in the servingCellConfig is two.

### <Option 2-3>

By default, the UE may use (apply) the TAG ID with a small/large index from among the plurality of (for example, two) TAG IDs associated/configured with another unified TCI state. In this case, the (number of) TAG IDs associated/configured with another unified TCI state may be two. Alternatively, the UE may assume that the number of TAG IDs associated/configured with another unified TCI state is two.

### <Option 2-4>

Assuming option 5 of the first embodiment described above, by default, the UE may deem (or may assume) that the value of the 1-bit indicator for the unified TCI state is "0" or "1."

### <Option 2-5>

The UE may expect that the UL channel/signal indicating the unified TCI state that is not associated/configured with a certain TAG ID is not present. In other words, the UE may expect that the UL channel/signal is not indicated by the unified TCI state that is not associated/configured with a certain TAG ID.

### <Option 2-6>

The UE may expect that the unified TCI state that is not associated/configured with a certain TAG ID is not activated.

According to the second embodiment described above, the UE can appropriately determine the timing advance in accordance with conditions.

### <Variations>

In each of the embodiments described above, the indicated TCI state (indicated unified TCI state) may be applied to several UL channels/signals. At the same time, the configured TCI state (configured unified TCI state) may be applied to several other UL channels/signals.

Each of the embodiments described above may be applied to both the indicated TCI state (indicated unified TCI state) and the configured TCI state (configured unified TCI state).

Each of the embodiments described above may be applied only to the indicated TCI state (indicated unified TCI state).

Each of the embodiments described above may be applied only to the configured TCI state (configured unified TCI state).

In single DCI based multi-TRPs, one piece of DCI may indicate one or two unified TCI states. For example, if two unified TCI states are indicated, a first unified TCI state may be associated with a first (lower/higher) TAG ID and a second unified TCI state may be associated with a second (higher/lower) TAG ID. The first/second TAG ID may be configured/indicated by the higher layer signaling. If one unified TCI state is indicated, the unified TCI state may be associated with the first/second TAG ID.

The unified TCI state may be implicitly associated with the TAG ID. For example, when assuming that two TAG IDs are configured for the cell by the servingCellConfig, the unified TCI state (activated/indicated/configured TCI state) associated with the first CORESET pool index (CORESETPoolIndex = 0) may be associated with the first (lower) TAG ID.

When assuming that two TAG IDs are configured for the cell by the servingCellConfig, the unified TCI state (activated/indicated/configured TCI state) associated with the second CORESET pool index (CORESETPoolIndex = 1) may be associated with the second (higher) TAG ID. The relationship between the value of the CORESET pool index and the TAG ID may be reversed.

Each of the embodiments described above may only be used for (applied to) the unified TCI state that is not explicitly associated with a certain TAG ID.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific processing/operation/control information for at least one of the embodiments above
- supporting different Tas for two TRPs of a serving cell
- supporting different Tas for two TRPs for a PUSCH
- supporting different Tas for two TRPs of a PUCCH
- supporting different Tas for two TRPs of an SRS
- maximum number of (different) TAs/TAGs supported for one serving cell or across all serving cells
- supporting different Tas for M-DCI M TRP
- supporting different Tas for S-DCI M TRP
- supporting Ta for each TRP in multi-TRP.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating that the random access procedure/PRACH transmission without RAR monitoring is enabled, any RRC parameter for a specific release (e.g., Rel. 18/19), or the like.

When the UE does not support at least one of the specific UE capabilities above or is not configured with the specific information, operation of Rel. 15/16 may be applied, for example.

### (Supplementary Note)

Regarding one embodiment of the present disclosure, the following supplementary notes of the invention will be given.

### {Supplementary Note 1}

A terminal including:
a control section that determines a timing advance (TA) to be applied to a certain uplink (UL) transmission, based on a configuration for a serving cell; and
a transmitting section that performs the UL transmission based on the TA, wherein
in the configuration for the serving cell, an index of a TA group (TAG) to which the serving cell belongs and a unified Transmission Configuration Indication (TCI state) to be applied to the UL transmission are associated with each other.

### {Supplementary Note 2}

The terminal according to supplementary note 1, wherein the control section assumes that the TAG ID is not included in the configuration for the serving cell.

### {Supplementary Note 3}

The terminal according to supplementary note 1 or 2, wherein in the configuration for the serving cell, a maximum number of the index of the TAG (TAG ID) to be associated with the unified TCI state is larger than four.

### {Supplementary Note 4}

The terminal according to any one of supplementary notes 1 to 3, wherein the control section determines association between the index of the TAG and the unified TCI state, based on the configuration for the serving cell.

### (Radio Communication System)

Hereinafter, a structure of a radio communication system according to one embodiment of the present disclosure will be described. In this radio communication system, any of the radio communication methods according to each embodiment of the present disclosure described above may be used alone or may be used in combination for communication.

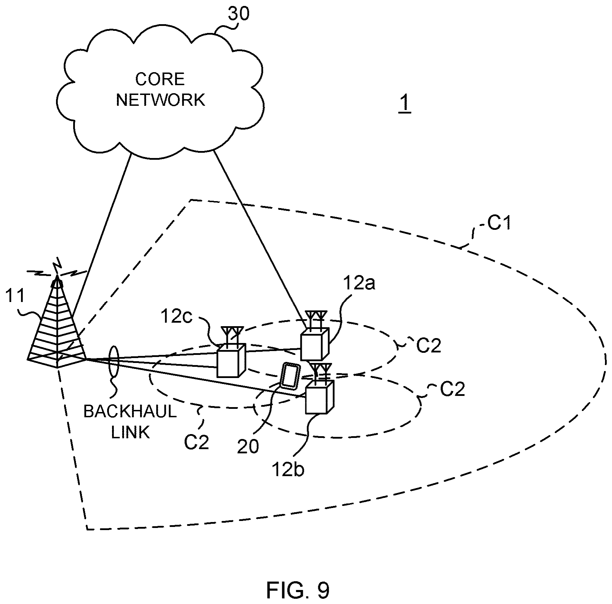

FIG. 9 is a diagram to show an example of a schematic structure of the radio communication system according to one embodiment. The radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include, for example, network functions (NF) such as a user plane function (UPF), an access and mobility management function (AMF), a session management function (SMF), unified data management (UDM), an application function (AF), a data network (DN), a location management function (LMF), and operation, administration, and maintenance (management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the

### DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

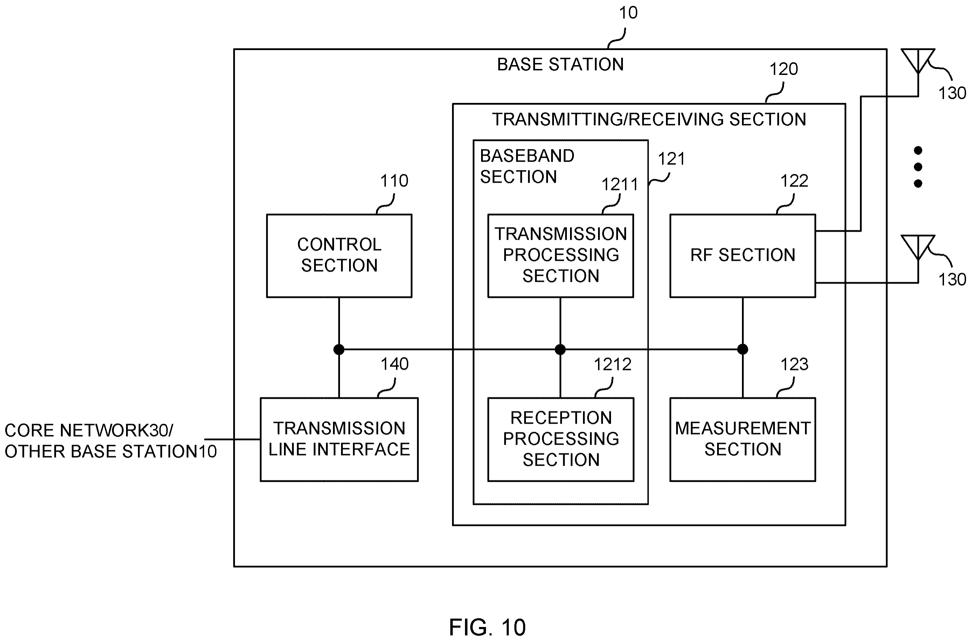

FIG. 10 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus (for example, a network node providing an NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit a configuration for a serving cell for a terminal to determine a timing advance (TA) to be applied to a certain uplink (UL) transmission. The transmitting/receiving section 120 may receive the UL transmission performed based on the TA.

### (User Terminal)

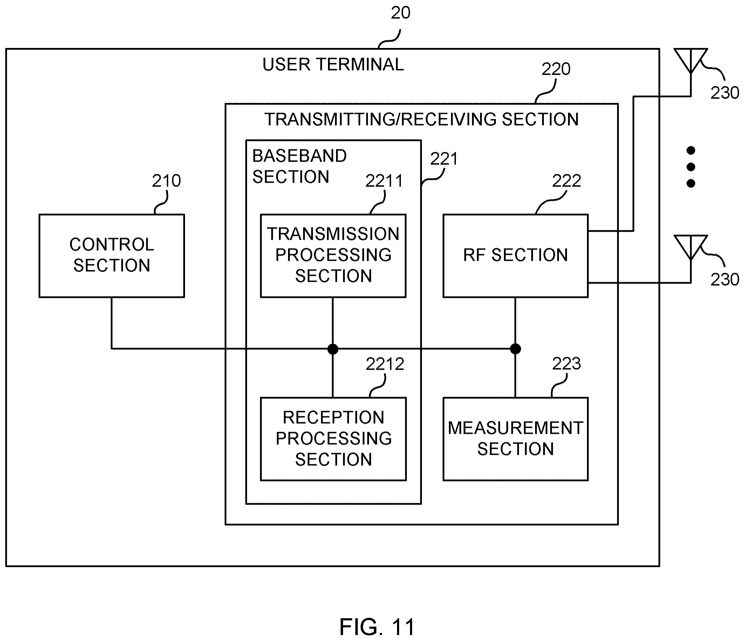

FIG. 11 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a channel measurement resource. The channel measurement resource may be, for example, a Non Zero Power (NZP) CSI-RS resource. The measurement unit 223 may derive interference measurement for CSI calculation, based on an interference measurement resource. The interference measurement resource may be at least one of an NZP CSI-RS resource for interference measurement, a CSI-interference measurement (IM) resource, and the like. Note that the CSI-IM may be referred to as CSI-interference management (IM), and may be interchangeably interpreted as zero power (ZP) CSI-RS. Note that in the present disclosure, the CSI-RS, the NZP CSI-RS, the ZP CSI-RS, the CSI-IM, the CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may perform the UL transmission based on the TA. In the configuration for the serving cell, an index of a TA group (TAG) to which the serving cell belongs and a unified Transmission Configuration Indication (TCI state) to be applied to the UL transmission may be associated with each other. In the configuration for the serving cell, the maximum number of the index of the TAG (TAG ID) to be associated with the unified TCI state may be larger than four.

The control section 210 may determine a timing advance (TA) to be applied to a certain uplink (UL) transmission, based on a configuration for a serving cell. The control section 210 may assume that the TAG ID is not included in the configuration for the serving cell. The control section 210 may determine association between the index of the TAG and the unified TCI state, based on the configuration for the serving cell.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

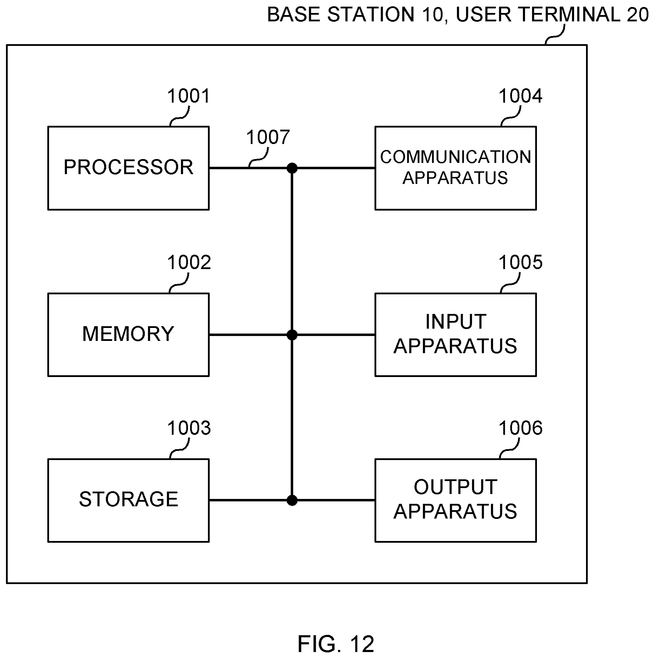

For example, a base station, a user terminal, and so on according to one embodiment of the present disclosure may function as a computer that executes the processes of the radio communication method of the present disclosure. FIG. 12 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station" a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit" "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

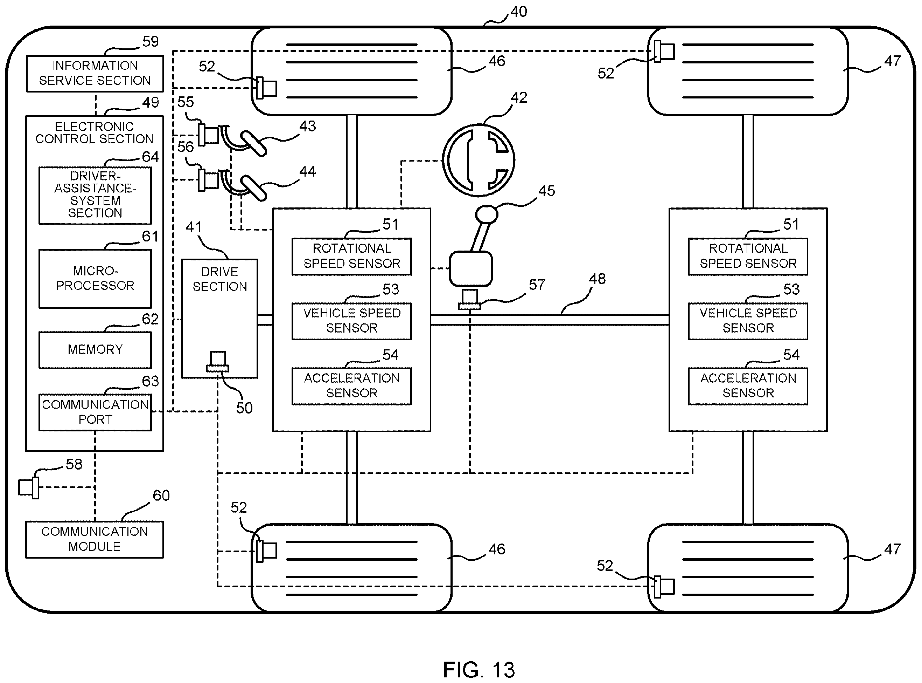

FIG. 13 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a control section that determines a timing advance (TA) to be applied to a certain uplink (UL) transmission, based on a configuration for a serving cell; and
a transmitting section that performs the UL transmission based on the TA, wherein
in the configuration for the serving cell, an index of a TA group (TAG) to which the serving cell belongs and a unified Transmission Configuration Indication (TCI state) to be applied to the UL transmission are associated with each other.

2. The terminal according to claim 1, wherein
the control section assumes that the TAG ID is not included in the configuration for the serving cell.

3. The terminal according to claim 1, wherein
in the configuration for the serving cell, a maximum number of the index of the TAG (TAG ID) to be associated with the unified TCI state is larger than four.

4. The terminal according to claim 1, wherein
the control section determines association between the index of the TAG and the unified TCI state, based on the configuration for the serving cell.

5. A radio communication method for a terminal, comprising:
determining a timing advance (TA) to be applied to a certain uplink (UL) transmission, based on a configuration for a serving cell; and
performing the UL transmission based on the TA, wherein
in the configuration for the serving cell, an index of a TA group (TAG) to which the serving cell belongs and a unified Transmission Configuration Indication (TCI state) to be applied to the UL transmission are associated with each other.

6. A base station comprising:
a transmitting section that transmits a configuration for a serving cell for a terminal to determine a timing advance (TA) to be applied to a certain uplink (UL) transmission; and
a receiving section that receives the UL transmission performed based on the TA, wherein
in the configuration for the serving cell, an index of a TA group (TAG) to which the serving cell belongs and a unified Transmission Configuration Indication (TCI state) to be applied to the UL transmission are associated with each other.
